# EUROPÄISCHE PATENTSCHRIFT

(11) **EP 4 488 083 B1**
(45) Veröffentlichungstag und Bekanntmachung des Hinweises auf die Patenterteilung: **19.08.2026**
(21) Anmeldenummer: 23182962.3
(22) Anmeldetag: 03.07.2023
(51) Int. Cl.: B60H 1/00, B60H 1/32

(54) **TRANSPORTKÄLTEMASCHINE MIT ELEKTRONIKGEHÄUSE UND NUTZFAHRZEUG MIT TRANSPORTKÄLTEMASCHINE**
TRANSPORT REFRIGERATION MACHINE HAVING AN ELECTRONICS HOUSING AND COMMERCIAL VEHICLE HAVING A TRANSPORT REFRIGERATION MACHINE
MACHINE FRIGORIFIQUE DE TRANSPORT DOTÉE D'UN BOÎTIER ÉLECTRONIQUE ET VÉHICULE UTILITAIRE DOTÉ D'UNE MACHINE FRIGORIFIQUE DE TRANSPORT

(43) Veröffentlichungstag der Anmeldung: 08.01.2025
(73) Patentinhaber: Schmitz Cargobull AG, 48341 Altenberge (DE)
(72) Erfinder: WANTIA, Sebastian, 48691 Vreden (DE); BARTELT, Gerd, 77767 Appenweiter (DE); HUES, Patrick, 48565 Steinfurt (DE); QUECKENSTEDT, Birger, 46325 Borken (DE)
(74) Vertreter: Cohausz & Florack

(56) Entgegenhaltungen:
- WO-A1-2014/047401
- WO-A1-2020/101905
- DE-A1- 3 035 854
- US-A1- 2017 184 343

## Beschreibung

Die Erfindung betrifft eine Transportkältemaschine zur Kühlung eines Kofferaufbaus eines Nutzfahrzeugs, insbesondere eines Lastkraftwagens, eines Anhängers oder eines Sattelaufliegers, mit einem Kältekreislauf zur Kreislaufführung eines Kältemittels und mit einer Elektronikeinheit zum Betreiben des Kältekreislaufs, wobei der Kältekreislauf einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine Drossel zum Entspannen des im Kondensator kondensierten Kältemittels umfasst, wobei die Elektronikeinheit in einem Elektronikgehäuse aufgenommen ist und wobei die Elektronikeinheit wenigstens einen Stecker und/oder wenigstens eine Buchse zur Ausbildung einer elektrischen Steckverbindung mit wenigstens einer korrespondierenden Buchse und/oder einem korrespondierenden Stecker aufweist. Ferner betrifft die Erfindung ein Nutzfahrzeug, insbesondere Lastkraftwagen, Anhänger oder Sattelauflieger, mit einem Kofferaufbau, einer Transportkältemaschine zum Kühlen eines im Kofferaufbau vorgesehenen Laderaums und einer, insbesondere unterhalb des Kofferaufbaus angeordneten, Batterie zum Betrieb der Transportkältemaschine.

Eine beispielhafte Transportkältemaschine ist aus der DE 30 35 854 A1 bekannt.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein. Durch die hohe thermische Isolationswirkung der Kernlage aus geschäumtem Kunststoff bieten sich entsprechende Kofferaufbauten zum Transportieren von zu kühlender Ladung an, wozu an den Stirnwänden der Kofferaufbauten Transportkältemaschinen montiert sind. Die Transportkältemaschinen saugen Luft aus dem Laderaum an, kühlen diese herunter und blasen die gekühlte Luft wieder in den Laderaum hinein. Um mehrere Zonen des Laderaums bedarfsweise unabhängig voneinander zu kühlen, können an der Decke in entsprechenden Zonen der Laderäume sogenannte Deckenverdampfer vorgesehen sein, die von der Transportkältemaschine mit Kältemittel versorgt werden.

Die Transportkältemaschinen sind typischerweise von einem Gehäuse an der Stirnwand nach vorne und zur Seite abgegrenzt. In den Transportkältemaschinen ist zudem ein Kältekreislauf mit einem Verdampfer vorgesehen. In dem Verdampfer wird ein zuvor über eine Drossel entspanntes Kältemittel verdampft, wobei das Kältemittel über eine Wärmetauscherfläche Wärme von der Luft des Laderaums aufnimmt. Das Kältemittel wird sodann verdichtet und in einem Kondensator kondensiert, wozu der Kondensator ebenfalls eine Wärmetauscherfläche aufweist, so dass die beim Kondensieren des Kältemittels freiwerdende Wärme an die Umgebung abgeführt werden kann.

Der Kältekreislauf der Transportkältemaschine kann über eine Verbrennungsmaschine, rein elektrisch oder auch hybrid angetrieben werden. Die Verbrennungsmaschine dient dabei insbesondere dem Antrieb des Verdichters und der Bereitstellung des für den Betrieb der Transportkältemaschine benötigten Stroms. Dabei kann die Verbrennungsmaschine den Verdichter direkt antreiben oder aber im Falle eines hybriden Betriebs zunächst einen Generator zur Stromerzeugung antreiben. Der von dem Generator erzeugte Strom kann dann einen Elektromotor zum Antrieb des Verdichters betreiben. Der über den Generator erzeugte Strom kann alternativ oder zusätzlich noch zum Betreiben von weiteren elektrischen Baugruppen genutzt werden. Um gänzlich auf eine Verbrennungsmaschine verzichten zu können, kann der Transportkältemaschine auch eine hinreichend große Batterie für einen rein elektrischen Betrieb zugeordnet werden. Diese Batterie kann beispielsweise in regelmäßigen Abständen an ein externes, stationäres Stromnetz angeschlossen werden, um die Batterie zu laden. Alternativ oder zusätzlich kann das Nutzfahrzeug eine sogenannte Generatorachse aufweisen, mit der während der Fahrt des Nutzfahrzeugs Strom generiert wird, um die Transportkältemaschine zu betreiben und/oder die Batterie des Nutzfahrzeugs zu laden. Bei einer Generatorachse handelt es sich um eine Achse des Nutzfahrzeugs, die mit einem von der Achse angetriebenen Generator gekoppelt ist.

Unabhängig von der Art der Transportkältemaschine, insbesondere aber bei einer hybrid oder rein elektrisch betriebenen Transportkältemaschine, bietet es sich an, elektrische und/oder elektronische Bauteile der Elektronikeinheit in einem Elektronikgehäuse zusammenzufassen. Dort sind die entsprechenden elektrischen und/oder elektronischen Baugruppen vor Umwelteinflüssen geschützt angeordnet. Zugleich sind aber auch Personen, etwa bei einer Wartung oder Reparatur, vor einem versehentlichen Stromschlag geschützt. Die Verwendung eines Elektronikgehäuses macht jedoch einen Anschluss desselben, an die elektrischen und/oder elektronischen Bauteile außerhalb des Elektronikgehäuses, wie etwa den Verdichter, eine Batterie, eine Generatorachse oder einen Anschluss zum Anschluss der Transportkältemaschine an ein externes Stromnetz, erforderlich. Mithin führt die Verwendung eines Elektronikgehäuses zu einem zusätzlichen konstruktiven Aufwand und mithin zu erhöhten Kosten. Dies ist im Zusammenhang mit der Transportkältemaschine von besonderer Bedeutung, da hierbei stets die Zuverlässigkeit des Betriebs der Transportkältemaschine einerseits und die Vermeidung möglicher Gefahren für die Transportkältemaschine wartende und/oder reparierende Personen durch einen Stromschlag andererseits sichergestellt werden muss.

Daher liegt der vorliegenden Erfindung die Aufgabe zugrunde, die Transportkältemaschine und das Nutzfahrzeug jeweils der eingangs genannten und zuvor näher erläuterten Art derart auszugestalten und weiterzubilden, dass der konstruktive Aufwand und die Herstellungskosten für das Verbinden des Elektronikgehäuses mit außerhalb des Elektronikgehäuses angeordneten elektrischen und/oder elektronischen Bauteilen verringert werden kann.

Diese Aufgabe ist bei einer Transportkältemaschine nach Anspruch 1 dadurch gelöst, dass das Elektronikgehäuse wenigstens überwiegend aus Blech und/oder Kunststoff gebildet ist, dass der wenigstens eine Stecker und/oder die wenigstens eine Buchse der Elektronikeinheit auf einer Adapterplatte mit einer wenigstens im Wesentlichen größeren Materialstärke als das Blech und/oder des Kunststoffs des Elektronikgehäuses montiert ist und dass die Adapterplatte in einer Aussparung in dem Elektronikgehäuse montiert ist.

Durch die Verwendung eines Elektronikgehäuses mit einer verhältnismäßig dünnen Blechhaut und einer zusätzlichen Adapterplatte aus einem dickeren Material kann ein leichtes und kostengünstiges Elektronikgehäuse bereitgestellt werden. Die dickere Adapterplatte wird dann in einem Bereich einer Aussparung des Elektronikgehäuses vorgesehen, um dort zuverlässig und sicher wenigstens eine Steckverbindung etablieren zu können. Hierzu ist auf der Adapterplatte wenigstens ein Stecker und/oder wenigstens eine Buchse vorgesehen, der oder die mit einer korrespondierend ausgebildeten Buchse oder mit einem korrespondierend ausgebildeten Stecker verbunden werden kann, um auf diese Weise eine Steckverbindung zu etablieren, mithin um das Elektronikgehäuse mit elektrischen und/oder elektronischen Bauteilen außerhalb des Elektronikgehäuses verbinden zu können. Durch die größere Materialstärke, mithin Dicke, der Adapterplatte im Vergleich zum Blech oder Kunststoff des übrigen Elektronikgehäuses, können die Steckverbindungen zuverlässig und sicher bereitgestellt werden.

Es wird so auch eine lange Lebenszeit erreicht, selbst wenn die Steckverbindungen oft getrennt und wieder gefügt werden müssen. Des Weiteren kann die Adapterplatte mit der wenigstens einen Buchse und/oder dem wenigstens einen Stecker bereits, bedarfsweise sogar individuell, vorkonfektioniert werden. Dies kann die Fertigung der Transportkältemaschine weiter vereinfachen.

Im Zusammenhang mit dem Elektronikgehäuse ist es nicht erforderlich, dass das Elektronikgehäuse gänzlich aus Blech oder einem Kunststoff gebildet ist. Es reicht aus, wenn das Elektronikgehäuse wenigstens überwiegend aus Blech oder wenigstens überwiegend aus Kunststoff gebildet ist. Es kann aber auch vorgesehen sein, dass das Elektronikgehäuse teilweise aus Blech und teilweise aus Kunststoff gebildet wird, wobei dann der wenigstens eine aus Blech gebildete Abschnitt zusammen mit dem wenigstens einen aus Kunststoff gebildete Abschnitt den überwiegenden Teil des Elektronikgehäuses ausmacht. In den beiden erstgenannten Fällen ist die Materialstärke der Adapterplatte wenigstens im Wesentlichen größer als die Materialstärke des überwiegenden Teils des Blechs oder des überwiegenden Teils des Kunststoffs des Elektronikgehäuses. Im letztgenannten Fall ist die Dicke der Adapterplatte wenigstens im Wesentlichen größer als ein überwiegender Teil des aus Blech und Kunststoff gebildeten Elektronikgehäuses.

Die genannte Aufgabe ist ferner bei einem Nutzfahrzeug nach Anspruch 13 dadurch gelöst, dass die Transportkältemaschine ein Elektronikgehäuse nach einem der Ansprüche 1 bis 12 aufweist und dass die Batterie über den wenigstens einen Stecker und/oder die wenigstens eine Buchse elektrisch mit dem Elektronikgehäuse verbunden ist.

Nutzfahrzeuge werden in vielen Fällen mit Transportkältemaschinen ausgerüstet, wobei die Transportkältemaschine meist an der Stirnwand eines Kofferaufbaus des Nutzfahrzeugs vorgesehen ist. Die Transportkältemaschine kann dann die Luft in einem im Kofferaufbau vorgesehenen Laderaum herunterkühlen. Es können auch mehrere Laderäume im Kofferaufbau vorgesehen sein, die mittels der Transportkältemaschine und einem mit der Transportkältemaschine verbundenen Deckenverdampfer in einem hinteren Bereich des Kofferaufbaus separat und bedarfsweise auf unterschiedliche Temperaturen heruntergekühlt werden. Bei der Transportkältemaschine handelt es sich erfindungsgemäß um eine Transportkältemaschine der zuvor beschriebenen Art, um deren Vorteile bei dem Nutzfahrzeug ausnutzen zu können. Dies ist in besonderem Maße möglich, wenn das Nutzfahrzeug eine Batterie umfasst, welche über den wenigstens einen Stecker und/oder über wenigstens eine Buchse der Adapterplatte mit dem Elektronikgehäuse verbunden ist. Dazu ist die Batterie bevorzugt über ein Kabel mit dem Elektronikgehäuse verbunden. An dem dem Elektronikgehäuse zugeordneten Ende des Kabels ist bedarfsweise eine Buchse und/oder ein Stecker vorgesehen, die oder der mit dem wenigstens einen Stecker und/oder der wenigstens einen Buchse der Adapterplatte des Elektronikgehäuse korrespondierend ausgebildet ist und mit diesem oder dieser zusammengesteckt ist, um eine elektrische Verbindung zwischen der Batterie und dem Elektronikgehäuse der Transportkältemaschine zu etablieren. In diesem Zusammenhang ist es weiter bevorzugt, wenn die Batterie aus Platzgründen außerhalb der Transportkältemaschine vorgesehen ist. Dies kann in vielen Fällen zweckmäßig erreicht werden, wenn die Batterie unterhalb des Kofferaufbaus angeordnet ist.

Hinsichtlich der Elektronikeinheit ist anzumerken, dass die verwendete Begrifflichkeit "Elektronik" nicht zwingend eine Abgrenzung zu dem Begriff "Elektrik" implizieren soll. Unter der Elektronikeinheit soll vielmehr insbesondere eine Einheit verstanden werden, die wenigstens eine Elektronikbaugruppe und/oder wenigstens eine Elektrikbaugruppe aufweist. Erfindungsgemäß kommt es mithin nicht unbedingt darauf an, ob es sich bei der Elektronikeinheit tatsächlich um eine solche umfassend Elektronikbaugruppen oder elektrische Baugruppen, handelt. Ganz allgemein kann die Elektronikeinheit in einem Elektronikgehäuse untergebracht sein, wobei es sich bei dem Elektronikgehäuse tatsächlich auch wenigstens in Teilen um ein Elektrikgehäuse handeln kann. Der besseren Verständlichkeit halber und zur Vermeidung von unnötigen Wiederholungen wird im Folgenden stets von einer Elektronikeinheit und einem Elektronikgehäuse gesprochen, auch wenn der Begriff "Elektronik" hierbei nicht zwingend im klassischen Sinne zu verstehen sein muss. Zudem kann das Elektronikgehäuse bedarfsweise auch als eine Art Schaltschrank angesehen werden, in dem entsprechende Baugruppen zusammengefasst und mit Baugruppen außerhalb des Elektronikgehäuses und bedarfsweise auch außerhalb der Transportkältemaschine verbunden sind.

Bei einer ersten besonders bevorzugten Ausgestaltung der Transportkältemaschine weist die Elektronikeinheit wenigstens ein Ladegerät und/oder wenigstens einen Frequenzumrichter auf. Diese Bauteile sind bei der Ausbildung von elektrisch betriebenen Transportkältemaschinen von besonderer Bedeutung, da elektrische Transportkältemaschinen über eine Batterie angetrieben werden können, wobei der Betrieb der Transportkältemaschine eine Wechselspannung erfordert, obschon die Batterie eine Gleichspannung zur Verfügung stellt. Der Anschluss der Batterie an das Ladegerät und/oder den Frequenzumrichter kann einfach zuverlässig und sicher über die Adapterplatte des Elektronikgehäuses erfolgen, in dem das Ladegerät und/oder der Frequenzumrichter geschützt aufgenommen sind.

Die genannten Vorteile werden umso mehr erreicht, wenn das Ladegerät ein Laderegler und ein Netzteil umfasst. So können der Laderegler und das Netzteil zusammen geschützt in dem Elektronikgehäuse aufgenommen und zugleich mit der Batterie verbunden sein. Der Laderegler stellt dabei sicher, dass das Laden der Batterie in vorbestimmter Weise erfolgt, während das Netzteil eine Wandlung der Spannung auf ein anderes Spannungsniveau als das der für das Laden eingesetzten Spannung besorgt. Für das Laden der Batterie kann beispielsweise eine aus einem externen Stromnetz bezogene Spannung oder eine vom Nutzfahrzeug während des Fahrens selbst erzeugte Spannung genutzt werden. Hinsichtlich des Frequenzumrichters bietet es sich alternativ oder zusätzlich an, wenn der Frequenzumrichter ein bidirektionaler Frequenzumrichter ist. In diesem Fall kann der Frequenzumrichter beispielsweise die Gleichspannung der Batterie in Wechselspannung zum Betrieb der Transportkältemaschine sowie Wechselspannung zum Laden der Batterie in Gleichstrom wandeln.

Um eine sichere Steckverbindung bereitstellen zu können und das Anschließen von elektrischen Baugruppen an das Elektronikgehäuse zu vereinfachen, kann der wenigstens eine Stecker und/oder die wenigstens eine Buchse mit der Adapterplatte verschraubt sein. So wird letztlich eine feste und zuverlässige Verbindung mit dem Elektronikgehäuse geschaffen. Dies gilt insbesondere dann, wenn der wenigstens eine Stecker und/oder die wenigstens eine Buchse von außen auf die Adapterplatte geschraubt ist. So lässt sich die Verschraubung des wenigstens einen Steckers und/oder der wenigstens einen Buchse auch leicht nachziehen, wenn dies erforderlich sein sollte.

Der wenigstens eine Stecker und/oder die wenigstens eine Buchse der Adapterplatte kann mit dieser besonders zuverlässig und einfach verbunden werden, wenn die Adapterplatte wenigstens ein Sackloch aufweist. Dann kann beispielsweise eine Klemmverbindung und/oder eine Rastverbindung zwischen dem Sackloch der Adapterplatte und dem wenigstens einen Stecker und/oder der wenigstens einen Buchse bereitgestellt werden. Besonders bevorzugt wird es aus den genannten Gründen aber bedarfsweise sein, wenn der wenigstens eine Stecker und/oder die wenigstens eine Buchse mit dem wenigstens einen Sackloch verschraubt ist. In dem Sackloch der Adapterplatte kann zu diesem Zwecke ein Innengewinde vorgesehen sein.

Um die Verbindung zwischen dem wenigstens einen Stecker und/oder der wenigstens einen Buchse mit der Adapterplatte dauerhaft und zuverlässig zu gestalten, kann die Adapterplatte eine Materialstärke von wenigstens 6 mm, vorzugsweise von wenigstens 7,5 mm, insbesondere von wenigstens 9 mm, aufweisen. Grundsätzlich gilt dabei, dass die Adapterplatte umso größere Kräfte aufnehmen kann, je dicker die Adapterplatte ausgebildet ist. Dies gilt in besonderem Maße, wenn die Adapterplatte Sacklöcher aufweist. In den Sacklöchern können beispielsweise längere Innengewinde vorgesehen werden, wenn die Adapterplatte dicker ausgebildet ist. Um eine sehr stabile und kostgünstige Adapterplatte bereitstellen zu können, ist die Adapterplatte bevorzugt als eine Platte aus Metallguss, insbesondere Metalldruckguss, ausgebildet.

Zum elektrischen Anschluss des wenigstens einen Steckers und/oder der wenigstens einen Buchse durch die Adapterplatte hindurch an ein Bauteil innerhalb des Elektronikgehäuses kann der Einfachheit halber dem wenigstens einen Stecker und/oder der wenigstens einen Buchse eine Aussparung in der Adapterplatte zugeordnet sein, durch die der wenigstens eine Stecker und/oder die wenigstens eine Buchse in das Innere des Elektronikgehäuses ragen kann und/oder durch die ein elektrisches Anschlusskabel zum wenigstens einen Stecker und/oder zur wenigstens einen Buchse geführt werden kann.

Um eine hinreichende Kapselung des Elektronikgehäuses gegenüber Fremdstoffen, insbesondere Feuchtigkeit, zu erreichen, kann zwischen dem wenigstens einen Stecker und/oder der wenigstens einen Buchse einerseits und der Adapterplatte andererseits eine um die zugehörige Aussparung umlaufende Dichtung vorgesehen sein.

Einfach und zuverlässig ist es, wenn die Adapterplatte von innen in der Aussparung des Elektronikgehäuses montiert ist. Die Adapterplatte ist dabei größer als die Aussparung und steht umlaufend gegenüber der Aussparung nach außen vor. Zudem ist die Verbindung dann für unbefugte Personen nicht von außen zugänglich. Um die Adapterplatte über einen langen Zeitraum zuverlässig am Elektronikgehäuse zu halten, kann die Adapterplatte mit dem Elektronikgehäuse verschraubt sein, und zwar in bevorzugter Ausgestaltung von innen, also aus dem Innenraum des Elektronikgehäuses.

Um eine hinreichende Kapselung des Elektronikgehäuses gegenüber Fremdstoffen, insbesondere Feuchtigkeit, zu erreichen, kann zwischen der Adapterplatte und dem Elektronikgehäuse eine umlaufende Dichtung vorgesehen sein. Beim Verschrauben der Adapterplatte am Elektronikgehäuse kann die Dichtung dann umlaufend in Anlage an die Adapterplatte einerseits und an das an die Aussparung angrenzende Elektronikgehäuse andererseits gelangen.

Für ein einfaches und zudem zuverlässiges sowie langlebiges Verbinden von Adapterplatte und Elektronikgehäuse kann es sich anbieten, wenn das Elektronikgehäuse wenigstens einen, insbesondere mehrere, Gewindebolzen aufweist, die an der Innenseite des Elektronikgehäuses mit dem Blech des Elektronikgehäuses verschweißt sind. Wenn das Elektronikgehäuse aus Kunststoff gebildet ist, kann es sich anbieten, die Gewindebolzen anders zu montieren oder auf Alternativen zur Verwendung von Gewindebolzen zurückzugreifen. Diese können dann zum Verschrauben der Adapterplatte mit dem Elektronikgehäuse verwendet werden. Damit die Gewindebolzen vor Beschädigung geschützt sind und nicht weiter stören, wird es in vielen Fällen bevorzugt sein, wenn die Gewindebolzen sich nach innen in das Elektronikgehäuse erstrecken.

Die zuvor genannten Vorteile kommen in besonderem Maße zum Tragen, wenn auf der Adapterplatte mehrere Stecker und/oder mehrere Buchsen montiert sind. Gleiches gilt, wenn es sich bei der Transportkältemaschine um eine solche handelt, die ein Kühlkreislauf mit einer Pumpe und mit einem Kühler zum Abgeben von Wärme an die Umgebung aufweist. Dabei kann der Kühlkreislauf so vorgesehen sein, dass darüber Wärme aus der Transportkältemaschine an die Umgebung abgeführt wird. Der Kühlkreislauf kann alternativ oder zusätzlich auch so vorgesehen sein, dass dieser Wärme aus dem Elektronikgehäuse an die Umgebung abführt. Dazu kann der Kühlkreislauf der Einfachheit halber wenigstens teilweise in dem Elektronikgehäuse angeordnet sein. Dies ist besonders zweckmäßig zu realisieren, wenn wenigstens der Kühler über zwei Kühlmittelanschlüsse am Elektronikgehäuse mit dem im Elektronikgehäuse verlegten Teil des Kühlkreislaufs verbunden ist. Ein Kühlmittelanschluss kann dabei dazu ausgebildet sein, Kühlmittel nach außen zu einem Kühler zu leiten, während der andere Kühlmittelanschluss der Rückführung des Kühlmittels in das Elektronikgehäuse hinein dient.

Bei einer ersten besonders bevorzugten Ausgestaltung des Nutzfahrzeugs ist eine mit einem Generator verbundene Achse vorgesehen. Entsprechende Achsen werden auch als Generatorachsen bezeichnet. Der mit der Achse verbundene Generator kann dann über den wenigstens einen Stecker und/oder die wenigstens eine Buchse elektrisch mit dem Elektronikgehäuse verbunden werden. Auf diese Weise kann der mit der Generatorachse erzeugte Strom zum Betreiben der Transportkältemaschine und/oder zum Laden der Batterie genutzt werden. Um die bevorzugte Nutzung des erzeugten Stroms festzulegen und dafür Sorge zu tragen, dass der Strom an die Batterie und/oder den Verdichter der Transportkältemaschine weitergeleitet wird, sind entsprechende Bauteile, etwa ein Ladegerät und ein Frequenzumrichter in dem Elektronikgehäuse angeordnet. Die Generatorachse bzw. deren Generator ist der Einfachheit halber über wenigstens einen Stecker und/oder wenigstens eine Buchse auf der Adapterplatte des Elektronikgehäuses mit dem Elektronikgehäuse verbunden.

Wenn eine Drehstromsteckdose an der Transportkältemaschine oder am Nutzfahrzeug vorgesehen ist, kann der Drehstrom eines externen Stromnetzes genutzt werden, um das zu dieser Zeit nicht bewegte Nutzfahrzeug mit Strom zu versorgen. Der Strom kann dabei dazu genutzt werden, den Laderaum des Kofferaufbaus zu kühlen und/oder die Batterie des Nutzfahrzeugs zu laden. Die entsprechende Regelung und/oder Steuerung der Transportkältemaschine und/oder des Nutzfahrzeugs kann über entsprechende Bauelemente im dem Elektronikgehäuse erfolgen. Es ist also beispielsweise aus diesem Grund zweckmäßig, wenn die Drehstromsteckdose über den wenigstens einen Stecker und/oder die wenigstens eine Buchse elektrisch mit dem Elektronikgehäuse verbunden ist. Als Drehstromsteckdose kommt insbesondere eine CEE32-Buchse in Frage.

Nachfolgend wird die Erfindung anhand lediglich ein Ausführungsbeispiel darstellenden Zeichnung näher erläutert. **In** der Zeichnung zeigt
- Fig. 1: ein von einer Zugmaschine gezogenes erfindungsgemäßes Nutzfahrzeug mit einer erfindungsgemäßen Transportkältemaschine in einer perspektivischen Ansicht,
- Fig. 2: eine Draufsicht auf die Stirnwand des Nutzfahrzeugs aus Fig. 1 mit der Transportkältemaschine,
- Fig. 3: ein Elektronikgehäuse der Transportkältemaschine gemäß Fig. 2 in einer Seitenansicht,
- Fig. 4: ein Detail des Elektronikgehäuses aus Fig. 2 in einem Schnitt gemäß der Schnittebene IV-IV der Fig. 2,
- Fig. 5: ein Detail des Elektronikgehäuses aus Fig. 2 in einem Schnitt gemäß der Schnittebene V-V der Fig. 2 und
- Fig. 6: ein Fließbild betreffend die Transportkältemaschine aus Fig. 2 und ein Nutzfahrzeug aus Fig. 1.

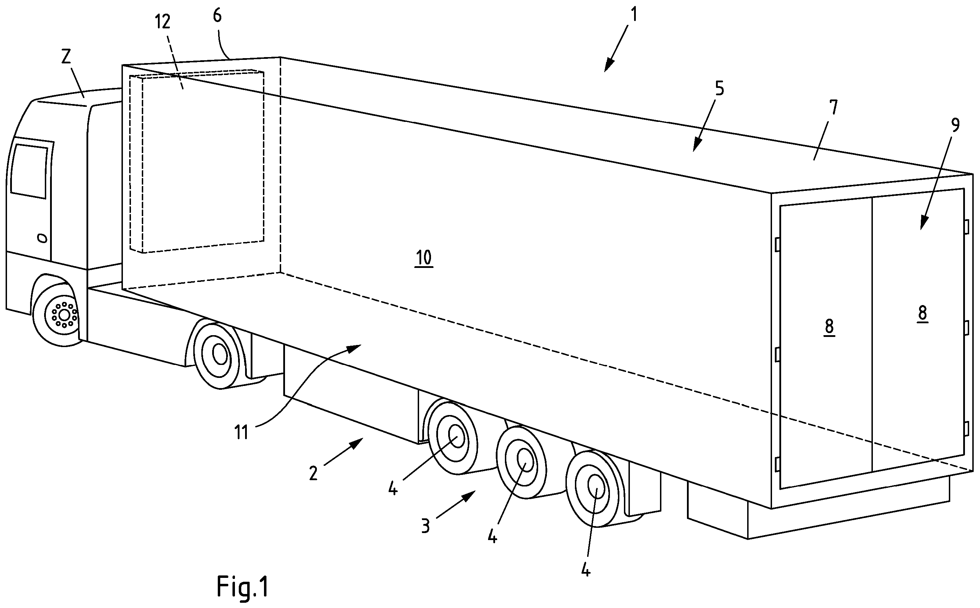

In der Fig. 1 ist ein von einer Zugmaschine Z gezogenes Nutzfahrzeug 1 in Form eines Sattelaufliegers dargestellt. Das Nutzfahrzeug 1 umfasst ein Chassis 2 und ein daran befestigtes Fahrwerk 3, welches drei separate Achsen 4 aufweist. Von dem Chassis 2 wird zudem ein Kofferaufbau 5 mit einer festen Stirnwand 6, einem festen Dach 7, festen Rückwandtüren 8 an einer Rückwand 9 und festen Seitenwänden 10 getragen. Die Stirnwand 6, die Seitenwände 10 und das Dach 7 werden durch nicht näher dargestellte Paneele gebildet, welche eine äußere Decklage und eine innere Decklage aufweisen, zwischen denen eine Kernlage aus einem geschäumten Kunststoff vorgesehen ist. Bei der inneren Decklage und der äußeren Decklage handelt es sich um strukturgebende Decklagen, die auch jeweils mehrlagig ausgebildet sein können. Die Kernlage dient dabei primär der thermischen Isolierung eines im Kofferaufbau 5 vorgesehenen Laderaums 11.

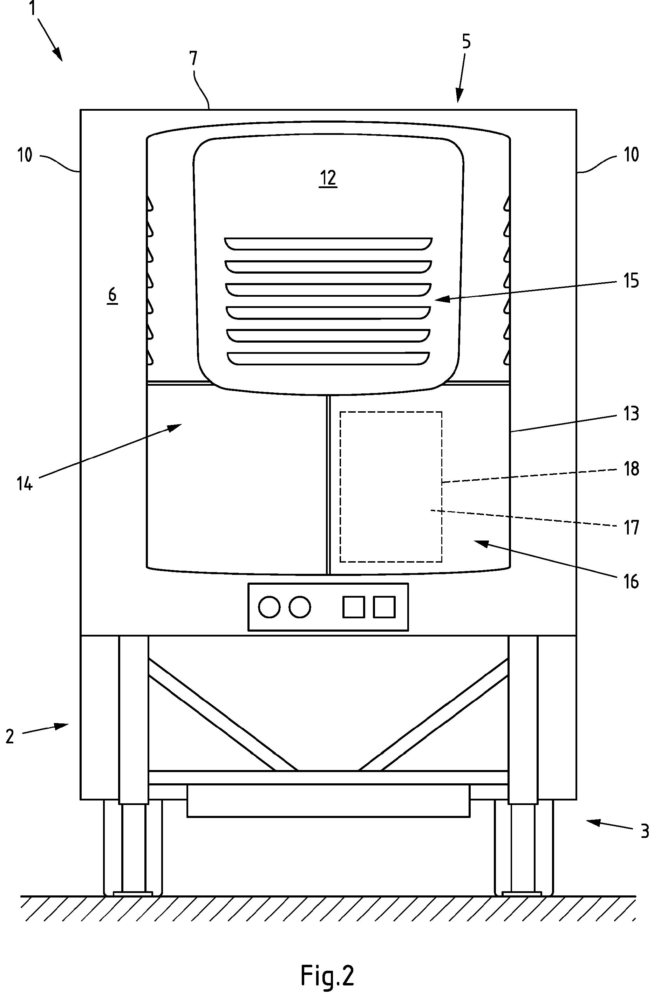

Um den Laderaum 11 des Kofferaufbaus 5 herunterkühlen zu können, ist an der Stirnwand 6 des Kofferaufbaus 5 eine insbesondere in der Fig. 2 dargestellte Transportkältemaschine 12 montiert, welche von einem Gehäuse 13 umschlossen ist. Von der Transportkältemaschine 12 wird Luft aus dem Laderaum 11 angesaugt, abgekühlt und wieder zurück in den Laderaum 11 geblasen. Zu diesem Zweck weist die Transportkältemaschine 12 einen nicht näher dargestellten Kältekreislauf 14 auf, der an sich grundsätzlich bekannt und prinzipiell auch in anderen Transportkältemaschinen vorgesehen ist. In dem Kältekreislauf 14 zirkuliert ein Kältemittel, von dem Wärme aufgenommen und an anderer Stelle wieder abgegeben werden kann. Der Kältekreislauf 14 umfasst dabei einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine dem Verdampfer vorgeschaltete Drossel zum Entspannen des im Kondensator kondensierten Kältemittels. Das Kältemittel nimmt beim Verdampfen Wärme von der Luft im Laderaum 11 auf, die anschließend im Kondensator beim Kondensieren des Kältemittels wieder an die Umgebung abgegeben wird. Zum Antrieb des Kältekreislaufs 14 und zum Anheben des Druckniveaus des Kältemittels ist der Verdichter vorgesehen. Um das Druckniveau des Kältemittels wieder zu senken und das Kältemittel wieder zu verdampfen, ist eine Drossel vorgesehen, die im konkreten Fall als ein Expansionsventil ausgebildet sein kann.

Die Transportkältemaschine 12 umfasst neben dem Kältekreislauf 14 noch einen Kühlkreislauf 16, der nicht dem Kühlen des Laderaums 11, sondern dem Kühlen der Transportkältemaschine 12 selbst dient, und zwar konkret dem Kühlen einer Elektronikeinheit 17 der Transportkältemaschine12. Die Elektronikeinheit 17 ist dabei in einem Elektronikgehäuse 18 der Transportkältemaschine 12 aufgenommen und umfasst ein Ladegerät aus einem Netzteil und einem Laderegler sowie einen, insbesondere bidirektionalen, Frequenzumrichter. Beide Bauteile erwärmen sich während des Betriebs der Transportkältemaschine 12, weshalb deren Wärme über den Kühlkreislauf 16 aus dem Elektronikgehäuse 18 abgeführt werden kann. Der Kühlkreislauf 16 verläuft bei der dargestellten und insoweit bevorzugten Transportkältemaschine 12 teilweise im Elektronikgehäuse 18 und teilweise außerhalb des Elektronikgehäuses 18. Außerhalb des Elektronikgehäuses 18 ist eine Pumpe im Kühlkreislauf angeordnet, wobei die Pumpe auch innerhalb des Elektronikgehäuses angeordnet sein könnte. Die Pumpe sorgt dafür, dass das Kühlmittel im Kühlkreislauf zirkuliert und durch den außerhalb des Elektronikgehäuses 18 angeordneten Kühler 15 strömt. Der Kühler 15 wird wie auch der Kondensator des Kältekreislaufs von Kühlluft aus der Umgebung angeströmt.

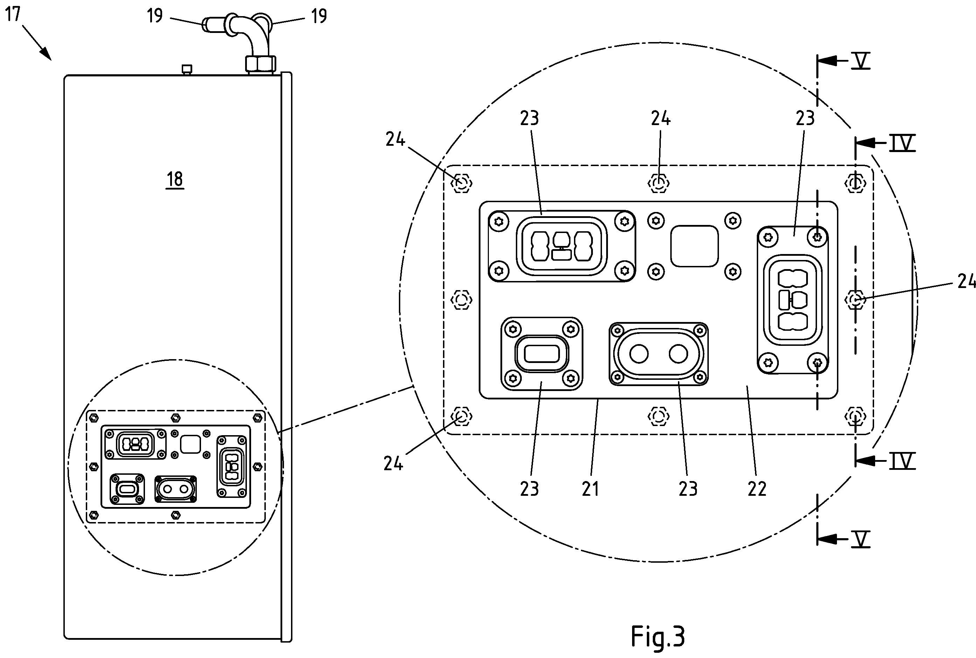

In der Fig. 3 ist das Elektronikgehäuse 18 in einer Seitenansicht dargestellt. Das Elektronikgehäuse 18 weist zwei Anschlüsse 19 des Kühlkreislaufs 16 auf, über die der Kühler 15 und die Pumpe an den in dem Elektronikgehäuse 18 verlegten Teil des Kühlreislaufs 16 anzuschließen ist. Das dargestellte und insoweit bevorzugte Elektronikgehäuse 18 ist aus Blech gebildet, wobei in dem Elektronikgehäuse 18 eine Aussparung 21 vorgesehen ist. Diese Aussparung 21 des Elektronikgehäuses 18 ist durch eine Adapterplatte 22 verschlossen, die aus einem Material gebildet ist, das dicker ist als das Blech des Elektronikgehäuses 18. Bei dem dargestellten und insoweit bevorzugten Elektronikgehäuse 18 ist die Adapterplatte 22 aus Metallguss hergestellt. Auf der Adapterplatte 22 sind von außen Buchsen 23 montiert, in die der besseren Übersichtlichkeit halber nicht dargestellte Stecker eingesteckt sind. Die entsprechenden Steckverbindungen dienen dazu, elektrische Verbindungen zwischen der in dem Elektronikgehäuse 18 angeordneten Elektronikeinheit 17 und außerhalb des Elektronikgehäuses 18 angeordneten Baugruppen, wie beispielsweise einer Batterie, einer Generatorachse, einer Drehstromsteckdose, einer Pumpe und/oder einem Verdichter, herzustellen.

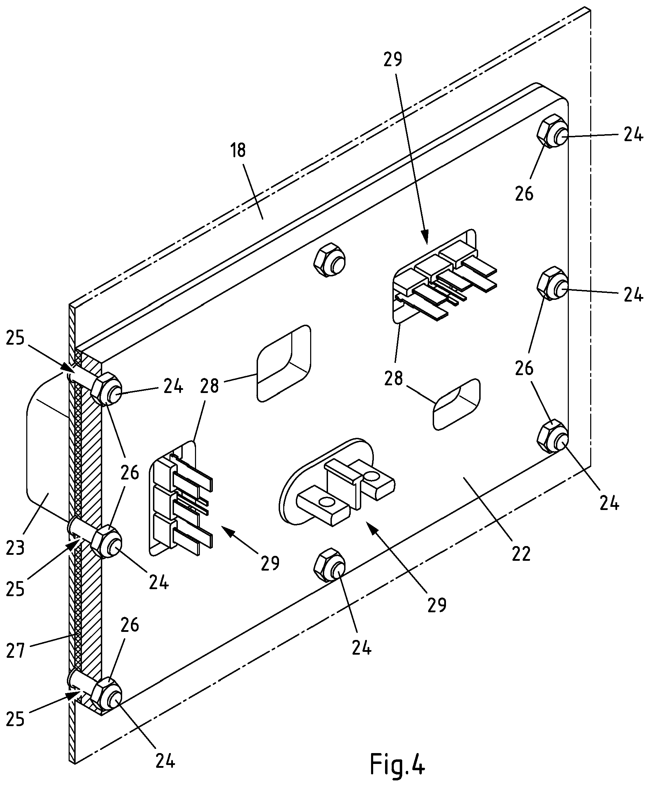

In der Fig. 4 ist ein Schnitt eines Details des Elektronikgehäuses 18 dargestellt. Das Elektronikgehäuse 18 weist dabei nach innen in das Elektronikgehäuse 18 ragende Gewindebolzen 24 auf, auf welche die Adapterplatte 22 mit entsprechenden Öffnungen 25 aufgesetzt ist. Die Adapterplatte 22 ist in diese Position über Kontermuttern 26 mit dem Elektronikgehäuse 18 verschraubt. Die Adapterplatte 22 überragt die Aussparung in Länge und Breite und jeweils zu beiden gegenüberliegenden Seiten. Zudem ist eine Dichtung 27 umlaufend um die Aussparung 21 zwischen dem Elektronikgehäuse 18 und der Adapterplatte 22 vorgesehen. Die Adapterplatte 22 weist den Buchsen 23 zugeordnete Aussparungen 28 auf, durch welche hindurch die Buchsen 23 elektrisch mit Bauteilen der Elektronikeinheit 17 verbunden sind. Dabei kann diese Verbindung wiederum als Steckverbindung ausgebildet sein, wobei die Kabel dann Stecker oder Buchsen aufweisen, um mit den Steckern 29 oder Buchsen an den Innenseiten der auf der Adapterplatte 22 montierten Buchsen 23 verbunden zu werden. Die entsprechenden Kabel sind der besseren Übersichtlichkeit halber nicht dargestellt.

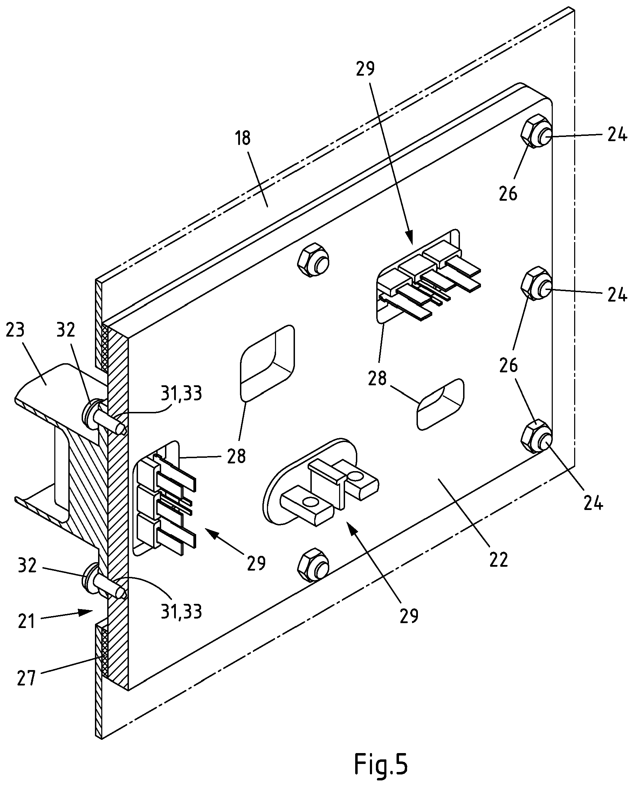

In der Fig. 5 ist ein weiterer Schnitt eines Details des Elektronikgehäuses 18 dargestellt. Die Adapterplatte 22 weist den darauf montierten Buchsen 23 zugeordnete Sacklöcher 30 auf, in denen Innengewinde 31 vorgesehen sind. Die Buchsen 23 sind mithin über zugehörige Schrauben 32 mit der Adapterplatte 22 verschraubt, wobei die Schrauben 32 in die Sacklöcher 30 eingreifen und über ihre Außengewinde 33 mit den korrespondierenden Innengewinden 31 der Sacklöcher 30 gefügt sind. Infolge der Sacklöcher 30 können Undichtigkeiten im Bereich der Buchsen 23 vermieden werden.

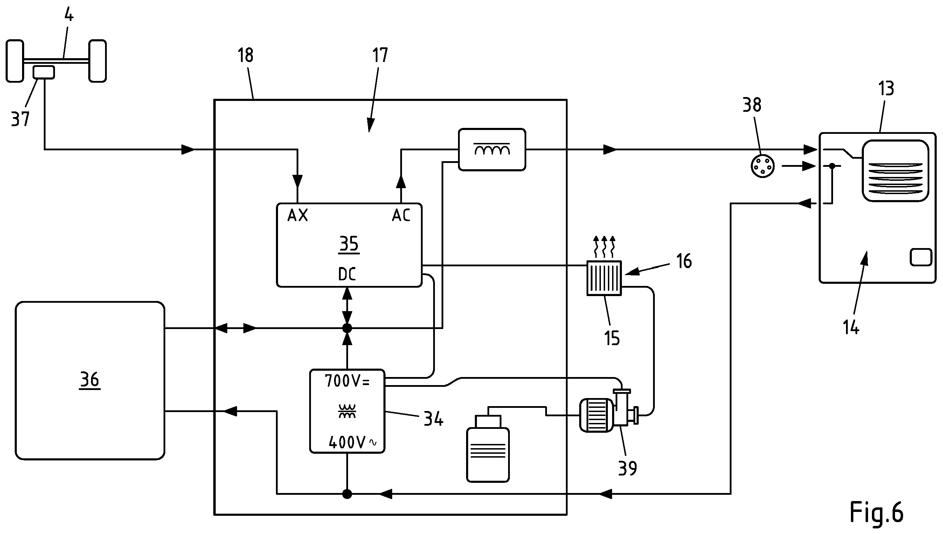

In der Fig. 6 ist ein schematisches Fließbild des Nutzfahrzeugs 1 und der Transportkältemaschine 12 dargestellt. In der Mitte der Fig. 6 ist ein Elektronikgehäuse 18 mit einer Elektronikeinheit 17 dargestellt, die ein Ladegerät 34 und einen Frequenzumrichter 35 umfasst. Es können grundsätzlich noch weitere Baugruppen oder auch andere Baugruppen in dem Elektronikgehäuse 18 vorgesehen sein, die ferner zur Elektronikeinheit 17 zählen können. Das Ladegerät 34 und der Frequenzumrichter 35 sind dabei mit einer außerhalb des Elektronikgehäuses 18, insbesondere unterhalb des Kofferaufbaus 5, am Nutzfahrzeug 1 vorgesehenen Batterie 36 verbunden. Zudem ist der Frequenzumrichter 35 mit einem Generator 37 verbunden, der mit einer Achse 4 des Nutzfahrzeugs 1 gekoppelt ist. Über die Achse 4 und den Generator 37 kann während der Fahrt des Nutzfahrzeugs 1 Strom erzeugt werden, der zum Antrieb der Transportkältemaschine 12 genutzt werden kann. Dafür wird jedoch zunächst mittels des Frequenzumrichters 35 ein Wechselstrom mit konstanter Frequenz erzeugt, da die Frequenz des vom Generator 37 erzeugten Stroms von der Rotationsgeschwindigkeit der Achse 4 bzw. des Generators 37 abhängig ist. Wenn das Nutzfahrzeug 1 steht, kann die Transportkältemaschine 12 über eine Drehstromsteckdose 38 an ein externes Stromnetz angeschlossen werden, um die Transportkältemaschine 12 mit Spannung zu versorgen. Die Drehstromsteckdose 38 ist an das Ladegerät 34 angeschlossen, mit dem die Batterie 36 des Nutzfahrzeugs 1 geladen werden kann. Zudem kann der von dem Generator 37 erzeugte Strom über den Frequenzumrichter 35 in einen Gleichstrom zum Laden der Batterie 36 gewandelt werden. Der Generator 37 und die Drehstromsteckdose 38 sind wie die Batterie 36 außerhalb des Elektronikgehäuses 18 angeordnet. Auch ist der Kältekreislauf 14 außerhalb des Elektronikgehäuses 18 angeordnet.

Die Verbindungen zwischen der im Elektronikgehäuse 18 vorgesehenen Elektronikeinheit 17 und den außerhalb des Elektronikgehäuses 18 vorgesehenen elektrischen Baugruppen, können allesamt mit den Buchsen 23 an der Adapterplatte 22 des Elektronikgehäuses 18 etabliert werden, indem entsprechende Kabel mit den Buchsen 23 korrespondierenden Steckern in die Buchsen 23 an der Adapterplatte 22 eingesteckt werden. In dem Fließbild der Fig. 6 sind diese Anschlüsse lediglich schematisch dargestellt und daher verteilt über das Elektronikgehäuse 18 dargestellt. Die entsprechenden Verbindungen sind jedoch, anders als in dem Fließbild dargestellt, an der Adapterplatte 22 räumlich konzentriert.

In dem Elektronikgehäuse 18 ist ein Teil des Kühlkreislaufs 16 vorgesehen, der thermisch mit dem Frequenzumrichter 35 und dem Ladegerät 34 gekoppelt ist, um diesen Baugruppen Wärme zu entziehen. Das auf diese Weise erwärmte Kühlmittel strömt dann in den außerhalb des Elektronikgehäuses 18 angeordneten Kühler 15, mit dem Wärme an die Kühlluft abgegeben wird, bevor das so abgekühlte Kühlmittel mittels einer Pumpe 39 zurück in das Elektronikgehäuse 18 gepumpt wird. Der Kühlkreislauf 16 ist also teilweise innerhalb des Elektronikgehäuses 18 und teilweise außerhalb des Elektronikgehäuses 18 vorgesehen.

### Bezugszeichenliste

- 1: Nutzfahrzeug
- 2: Chassis
- 3: Fahrwerk
- 4: Achsen
- 5: Kofferaufbau
- 6: Stirnwand
- 7: Dach
- 8: Rückwandtür
- 9: Rückwand
- 10: Seitenwand
- 11: Laderaum
- 12: Transportkältemaschine
- 13: Gehäuse
- 14: Kältekreislauf
- 15: Kühler
- 16: Kühlkreislauf
- 17: Elektronikeinheit
- 18: Elektronikgehäuse
- 19: Anschluss
- 21: Aussparung
- 22: Adapterplatte
- 23: Buchse
- 24: Gewindebolzen
- 25: Öffnung
- 26: Kontermutter
- 27: Dichtung
- 28: Aussparung
- 29: Stecker
- 30: Sackloch
- 31: Innengewinde
- 32: Schraube
- 33: Außengewinde
- 34: Ladegerät
- 35: Frequenzumrichter
- 36: Batterie
- 37: Generator
- 38: Drehstromsteckdose
- 39: Pumpe
- Z: Zugmaschine

## Patentansprüche

1. Transportkältemaschine (12) zur Kühlung eines Kofferaufbaus (5) eines Nutzfahrzeugs (1), insbesondere eines Lastkraftwagens, eines Anhängers oder eines Sattelaufliegers, mit einem Kältekreislauf (14) zur Kreislaufführung eines Kältemittels und mit einer Elektronikeinheit (17) zum Betreiben des Kältekreislaufs (14), wobei der Kältekreislauf (14) einen Verdampfer zum Verdampfen des Kältemittels, einen Verdichter zum Verdichten des im Verdampfer verdampften Kältemittels, einen Kondensator zum Kondensieren des im Verdichter verdichteten Kältemittels und eine Drossel zum Entspannen des im Kondensator kondensierten Kältemittels umfasst, wobei die Elektronikeinheit (17) in einem Elektronikgehäuse (18) aufgenommen ist und wobei die Elektronikeinheit (17) wenigsten einen Stecker und/oder wenigstens eine Buchse (23) zur Ausbildung einer elektrischen Steckverbindung mit wenigstens einer korrespondierenden Buchse und/oder einem korrespondierenden Stecker aufweist,
wobei das Elektronikgehäuse (18) wenigstens überwiegend aus Blech und/oder Kunststoff gebildet ist, **dadurch gekennzeichnet, dass**
der wenigstens eine Stecker und/oder die wenigstens eine Buchse (23) der Elektronikeinheit (17) auf einer Adapterplatte (22) mit einer wenigstens im Wesentlichen größeren Materialstärke als das Blech und/oder der Kunststoff des Elektronikgehäuses (18) montiert ist und dass die Adapterplatte (22) in einer Aussparung (21) in dem Elektronikgehäuse (18) montiert ist.

2. Transportkältemaschine nach Anspruch 1,
**dadurch gekennzeichnet, dass**
das Elektronikgehäuse (18) wenigstens ein Ladegerät (34) und/oder einen Frequenzumrichter (35) aufweist und dass, vorzugsweise, das Ladegerät (34) einen Laderegler und ein Netzteil aufweist und/oder der Frequenzumrichter (35) ein bidirektionaler Frequenzumrichter (35) ist.

3. Transportkältemaschine nach Anspruch 1 oder 2,
**dadurch gekennzeichnet, dass**
der wenigstens eine Stecker und/oder die wenigstens eine Buchse (23) mit der Adapterplatte (22) verschraubt ist und dass, vorzugsweise, der wenigstens eine Stecker und/oder die wenigstens eine Buchse (23) von außen auf die Adapterplatte (22) geschraubt ist.

4. Transportkältemaschine nach einem der Ansprüche 1 bis 3,
**dadurch gekennzeichnet, dass**
die Adapterplatte (22) wenigstens ein Sackloch (30) aufweist und dass, vorzugsweise, der wenigstens eine Stecker und/oder die wenigstens eine Buchse (23) mit dem wenigstens einen Sackloch (30) verschraubt ist.

5. Transportkältemaschine nach einem der Ansprüche 1 bis 4,
**dadurch gekennzeichnet, dass**
die Adapterplatte (22) eine Materialstärke von wenigstens 6 mm, vorzugsweise von wenigstens 7,5 mm, insbesondere von wenigstens 9 mm, aufweist und/oder dass die Adapterplatte (22) eine Platte aus Metallguss, insbesondere Metalldruckguss, ist.

6. Transportkältemaschine nach einem der Ansprüche 1 bis 5,
**dadurch gekennzeichnet, dass**
dem wenigstens einen Stecker und/oder der wenigstens einen Buchse (23) eine Aussparung (28) in der Adapterplatte (22) zum elektrischen Anschluss des wenigstens einen Steckers und/oder der wenigstens einen Buchse (23) durch die Adapterplatte (22) hindurch zugeordnet ist.

7. Transportkältemaschine nach Anspruch 6,
**dadurch gekennzeichnet, dass**
zwischen dem wenigstens einen Stecker und/oder der wenigstens einen Buchse (23) einerseits und der Adapterplatte (22) andererseits eine um die zugehörige Aussparung (21) umlaufende Dichtung vorgesehen ist.

8. Transportkältemaschine nach einem der Ansprüche 1 bis 7,
**dadurch gekennzeichnet, dass**
die Adapterplatte (22) von innen in der Aussparung (21) des Elektronikgehäuses (18) montiert ist und/oder dass die Adapterplatte (22), vorzugsweise von innen, mit dem Elektronikgehäuse (18) verschraubt ist.

9. Transportkältemaschine nach einem der Ansprüche 1 bis 8,
**dadurch gekennzeichnet, dass**
zwischen der Adapterplatte (22) und dem Elektronikgehäuse (18) eine umlaufende Dichtung (27) vorgesehen ist.

10. Transportkältemaschine nach einem der Ansprüche 1 bis 9,
**dadurch gekennzeichnet, dass**
das Elektronikgehäuse Gewindebolzen (24) zum Verschrauben der Adapterplatte (22) mit dem Elektronikgehäuse (18) aufweist und dass, vorzugsweise, die Gewindebolzen (24) sich nach innen in das Elektronikgehäuse (18) erstrecken.

11. Transportkältemaschine nach einem der Ansprüche 1 bis 10,
**dadurch gekennzeichnet, dass**
auf der Adapterplatte (22) mehrere Stecker und/oder mehrere Buchsen (23) montiert sind.

12. Transportkältemaschine nach einem der Ansprüche 1 bis 11,
**dadurch gekennzeichnet, dass**
ein Kühlkreislauf (16) mit einer Pumpe (39) und mit einem Kühler (15) zum Abgeben von Wärme an die Umgebung vorgesehen und wenigstens teilweise in dem Elektronikgehäuse (18) angeordnet ist und dass, vorzugsweise, wenigstens der Kühler (15) über zwei Kühlmittelanschlüsse am Elektronikgehäuse (18) mit dem im Elektronikgehäuse (18) verlegten Teil des Kühlkreislaufs (16) verbunden ist.

13. Nutzfahrzeug (1), insbesondere Lastkraftwagen, Anhänger oder Sattelauflieger,
mit einem Kofferaufbau (5), einer Transportkältemaschine (12) nach einem der Ansprüche 1-12 zum Kühlen eines im Kofferaufbau (5) vorgesehenen Laderaums (11) und einer, insbesondere unterhalb des Kofferaufbaus (5) angeordneten, Batterie (36) zum Betrieb der Transportkältemaschine (12),
**dadurch gekennzeichnet, dass**
die Transportkältemaschine (12) ein Elektronikgehäuse (18) aufweist und dass die Batterie (36) über den wenigstens einen Stecker und/oder die wenigstens eine Buchse (23) elektrisch mit dem Elektronikgehäuse (18) verbunden ist.

14. Nutzfahrzeug nach Anspruch 13,
**dadurch gekennzeichnet, dass**
eine mit einem Generator (37) verbundene Achse (4) des Nutzfahrzeugs (1) vorgesehen ist und dass der mit der Achse (4) verbundene Generator (37) über den wenigstens einen Stecker und/oder die wenigstens eine Buchse (23) elektrisch mit dem Elektronikgehäuse (18) verbunden ist.

15. Nutzfahrzeug nach Anspruch 13 oder 14,
**dadurch gekennzeichnet, dass**
eine Drehstromsteckdose (38) an der Transportkältemaschine (12) oder am Nutzfahrzeug (1) vorgesehen ist und dass die Drehstromsteckdose (38) über den wenigstens einen Stecker und/oder die wenigstens eine Buchse (23) elektrisch mit dem Elektronikgehäuse (18) verbunden ist.

## Claims

1. A transport refrigeration unit (12) for cooling the cargo body (5) of a commercial vehicle (1), in particular a truck, a trailer, or a semi-trailer, comprising a refrigeration cycle (14) for circulating a refrigerant and an electronic control unit (17) for operating the refrigeration cycle (14), wherein the refrigeration cycle (14) comprises an evaporator for vaporizing the refrigerant, a compressor for compressing the refrigerant vaporized in the evaporator, a condenser for condensing the refrigerant compressed in the compressor, and a throttle for expanding the refrigerant condensed in the condenser, wherein the electronic unit (17) is housed in an electronics housing (18), and wherein the electronics unit (17) has at least one plug and/or at least one socket (23) for forming an electrical plug connection with at least one corresponding socket and/or one corresponding plug, wherein the electronics housing (18) is formed at least predominantly from sheet metal and/or plastic,
**characterized in that** the at least one plug and/or the at least one socket (23) of the electronic unit (17) is mounted on an adapter plate (22) having a material thickness that is at least substantially greater than that of the sheet metal and/or plastic of the electronic housing (18), and that the adapter plate (22) is mounted in a recess (21) in the electronics housing (18).

2. Transport refrigeration unit according to claim 1,
**characterized in that**
the electronics housing (18) comprises at least one charger (34) and/or a frequency converter (35), and that, preferably, the charger (34) comprises a charge controller and a power supply, and/or the frequency converter (35) is a bidirectional frequency converter (35).

3. Transport refrigeration unit according to claim 1 or 2,
**characterized in that**
the at least one plug and/or the at least one socket (23) is screwed to the adapter plate (22), and that, preferably, the at least one plug and/or the at least one socket (23) is screwed onto the adapter plate (22) from the outside.

4. A transport refrigeration unit according to any one of claims 1 through 3,
**characterized in that**
the adapter plate (22) has at least one blind hole (30), and preferably, the at least one plug and/or the at least one socket (23) is screwed to the at least one blind hole (30).

5. A transport refrigeration unit according to any one of claims 1 through 4,
**characterized in that**
the adapter plate (22) has a material thickness of at least 6 mm, preferably at least 7.5 mm, and in particular at least 9 mm, and/or that the adapter plate (22) is a plate made of cast metal, in particular die-cast metal.

6. A transport refrigeration unit according to any one of claims 1 through 5,
**characterized in that**
the at least one plug and/or the at least one socket (23) is associated with a recess (28) in the adapter plate (22) for the electrical connection of the at least one plug and/or the at least one socket (23) through the adapter plate (22).

7. A transport refrigeration unit according to claim 6,
**characterized in that**
a seal surrounding the corresponding recess (21) is provided between the at least one plug and/or the at least one socket (23) on the one hand and the adapter plate (22) on the other hand.

8. A transport refrigeration unit according to any one of claims 1 through 7,
**characterized in that**
the adapter plate (22) is mounted from the inside in the recess (21) of the electronics housing (18) and/or that the adapter plate (22) is screwed to the electronics housing (18), preferably from the inside.

9. A transport refrigeration unit according to any one of claims 1 through 8,
**characterized in that**
a circumferential seal (27) is provided between the adapter plate (22) and the electronics housing (18).

10. A transport refrigeration unit according to any one of claims 1 through 9,
**characterized in that**
the electronics housing includes threaded bolts (24) for fastening the adapter plate (22) to the electronics housing (18), and, preferably, the threaded bolts (24) extend inward into the electronics housing (18).

11. A transport refrigeration unit according to any one of claims 1 through 10,
**characterized in that**
several plugs and/or several sockets (23) are mounted on the adapter plate (22).

12. A transport refrigeration unit according to any one of claims 1 through 11,
**characterized in that**
a cooling circuit (16) with a pump (39) and a radiator (15) for dissipating heat to the environment is provided and is at least partially arranged within the electronics housing (18), and that, preferably, at least the cooler (15) is connected via two coolant connections on the electronics housing (18) to the portion of the cooling circuit (16) routed within the electronics housing (18).

13. Commercial vehicle (1), in particular a truck, trailer, or semi-trailer, with a box body (5), a transport refrigeration unit (12) according to one of claims 1 to 12 for cooling a cargo compartment (11) provided in the box body (5), and a battery (36)-located, in particular, below the box body (5)-for operating the transport refrigeration unit (12),
**characterized in that**
the transport refrigeration unit (12) comprises an electronics housing (18), and the battery (36) is electrically connected to the electronics housing (18) via the at least one plug and/or the at least one socket (23).

14. Commercial vehicle according to claim 13,
**characterized in that**
an axle (4) of the commercial vehicle (1) connected to a generator (37) is provided, and the generator (37) connected to the axle (4) is electrically connected to the electronics housing (18) via the at least one plug and/or the at least one socket (23).

15. A commercial vehicle according to claim 13 or 14,
**characterized in that**
a three-phase power outlet (38) is provided on the transport refrigeration unit (12) or on the commercial vehicle (1), and the three-phase power outlet (38) is electrically connected to the electronics housing (18) via the at least one plug and/or the at least one socket (23).

## Revendications

1. Groupe frigorifique de transport (12) destiné au refroidissement d'une carrosserie fourgon (5) d'un véhicule utilitaire (1), en particulier d'un camion, d'une remorque ou d'une semi-remorque, comprenant un circuit frigorifique (14) destiné à faire circuler un fluide frigorigène et une unité électronique (17) destinée à faire fonctionner le circuit frigorifique (14), le circuit frigorifique (14) comprend un évaporateur destiné à évaporer le fluide frigorigène, un compresseur destiné à comprimer le fluide frigorigène évaporé dans l'évaporateur, un condenseur destiné à condenser le fluide frigorigène comprimé dans le compresseur et un détendeur destiné à détendre le fluide frigorigène condensé dans le condenseur, l'unité électronique (17) est logée dans un boîtier électronique (18) et l'unité électronique (17) comportant au moins une fiche et/ou au moins une prise (23) pour établir une connexion électrique par enfichage avec au moins une prise correspondante et/ou une fiche correspondante, le boîtier électronique (18) étant constitué au moins en grande partie de tôle et/ou de plastique,
**caractéris é en ce que** la au moins une fiche et/ou la au moins une prise (23) de l'unité électronique (17) est montée sur une plaque d'adaptation (22) présentant une épaisseur de matériau au moins sensiblement supérieure à celle de la tôle et/ou de la matière plastique du boîtier électronique (18), et en ce que la plaque d'adaptation (22) est montée dans un évidement (21) du boîtier électronique (18).

2. Machine frigorifique de transport selon la revendication 1,
**caractérisé en ce que**
le boîtier électronique (18) comporte au moins un chargeur (34) et/ou un convertisseur de fréquence (35) et **en ce que**, de préférence, le chargeur (34) comporte un régulateur de charge et une alimentation électrique et/ou le convertisseur de fréquence (35) est un convertisseur de fréquence bidirectionnel (35).

3. Machine frigorifique de transport selon la revendication 1 ou 2,
**caractérisée en ce que**
la au moins une fiche et/ou la au moins une prise (23) est vissée à la plaque d'adaptation (22) et **en ce que**, de préférence, la au moins une fiche et/ou la au moins une prise (23) est vissée depuis l'extérieur sur la plaque d'adaptation (22).

4. Machine frigorifique de transport selon l'une des revendications 1 à 3,
**caractérisée en ce que**
la plaque d'adaptation (22) comporte au moins un trou borgne (30) et, de préférence, la ou les fiches et/ou la ou les prises (23) sont vissées dans ledit au moins un trou borgne (30).

5. Machine frigorifique de transport selon l'une des revendications 1 à 4,
**caractérisée en ce que**
la plaque d'adaptation (22) présente une épaisseur d'au moins 6 mm, de préférence d'au moins 7,5 mm, en particulier d'au moins 9 mm, et/ou que la plaque d'adaptation (22) est une plaque en métal moulé, en particulier en métal moulé sous pression.

6. Machine frigorifique de transport selon l'une des revendications 1 à 5,
**caractérisée en ce que**
à la au moins une fiche et/ou à la au moins une prise (23) est associé un évidement (28) dans la plaque d'adaptation (22) pour le raccordement électrique de la au moins une fiche et/ou de la au moins une prise (23) à travers la plaque d'adaptation (22).

7. Machine frigorifique de transport selon la revendication 6,
**caractérisé en ce que**
un joint d'étanchéité entourant l'évidement correspondant (21) est prévu entre la au moins une fiche et/ou la au moins une prise (23), d'une part, et la plaque d'adaptation (22), d'autre part.

8. Machine frigorifique de transport selon l'une des revendications 1 à 7,
**caractérisée en ce que**
la plaque d'adaptation (22) est montée de l'intérieur dans l'évidement (21) du boîtier électronique (18) et/ou que la plaque d'adaptation (22) est vissée, de préférence de l'intérieur, au boîtier électronique (18).

9. Machine frigorifique de transport selon l'une des revendications 1 à 8,
**caractérisée en ce que**
un joint d'étanchéité périphérique (27) est prévu entre la plaque d'adaptation (22) et le boîtier électronique (18).

10. Machine frigorifique de transport selon l'une des revendications 1 à 9,
**caractérisée en ce que**
le boîtier électronique comporte des boulons filetés (24) destinés à visser la plaque d'adaptation (22) sur le boîtier électronique (18) et, de préférence, les boulons filetés (24) s'étendent vers l'intérieur du boîtier électronique (18).

11. Machine frigorifique de transport selon l'une des revendications 1 à 10,
**caractérisée en ce que**
plusieurs fiches et/ou plusieurs prises (23) sont montées sur la plaque d'adaptation (22).

12. Machine frigorifique de transport selon l'une des revendications 1 à 11,
**caractérisée en ce que**
un circuit de refroidissement (16) comprenant une pompe (39) et un radiateur (15) destiné à dissiper la chaleur vers l'environnement est prévu et est disposé au moins en partie dans le boîtier électronique (18), et **en ce que**, de préférence, au moins le radiateur (15) est relié, par l'intermédiaire de deux raccords de fluide frigorigène situés sur le boîtier électronique (18), à la partie du circuit de refroidissement (16) acheminée dans le boîtier électronique (18).

13. Véhicule utilitaire (1), en particulier camion, remorque ou semi-remorque, comportant une carrosserie de type fourgon (5), d'un groupe frigorifique de transport (12) selon l'une des revendications 1 à 12 destiné à refroidir un espace de chargement (11) prévu dans la carrosserie de type fourgon (5) et d'une batterie (36), disposée notamment sous la carrosserie de type fourgon (5), destinée à alimenter le groupe frigorifique de transport (12),
**caractérisé en ce que**
le groupe frigorifique de transport (12) comporte un boîtier électronique (18) et que la batterie (36) est reliée électriquement au boîtier électronique (18) par l'intermédiaire d'au moins une fiche et/ou d'au moins une prise (23).

14. Véhicule utilitaire selon la revendication 13,
**caractérisé en ce que**
un essieu (4) du véhicule utilitaire (1), relié à un générateur (37), est prévu et **en ce que** le générateur (37) relié à l'essieu (4) est relié électriquement au boîtier électronique (18) par l'intermédiaire d'au moins une fiche et/ou d'au moins une prise (23).

15. Véhicule utilitaire selon la revendication 13 ou 14,
**caractérisé en ce que**
une prise triphasée (38) est prévue sur le groupe frigorifique de transport (12) ou sur le véhicule utilitaire (1) et que la prise triphasée (38) est reliée électriquement au boîtier électronique (18) par l'intermédiaire de l', au moins une fiche et/ou au moins une prise (23).
